(19) **Europäisches Patentamt / European Patent Office / Office européen des brevets**

(11) **EP 4 024 947 A1**

(12) **EUROPEAN PATENT APPLICATION**
published in accordance with Art. 153(4) EPC

(43) Date of publication:
06.07.2022  Bulletin 2022/27

(21) Application number: 19947403.2

(22) Date of filing: 27.09.2019

(51) International Patent Classification (IPC):
*H04W 36/00* (2009.01)

(52) Cooperative Patent Classification (CPC):
**H04W 36/00**; Y02D 30/70

(86) International application number:
**PCT/CN2019/108726**

(87) International publication number:
**WO 2021/056468 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Longgang District
Shenzhen,
Guangdong 518129 (CN)**

(72) Inventors:
• **GENG, Tingting**
  **Shenzhen, Guangdong 518129 (CN)**
• **WU, Yedan**
  **Shenzhen, Guangdong 518129 (CN)**
• **YAN, Le**
  **Shenzhen, Guangdong 518129 (CN)**

(74) Representative: **Gill Jennings & Every LLP
The Broadgate Tower
20 Primrose Street
London EC2A 2ES (GB)**

(54) **METHOD AND DEVICE FOR CELL RESELECTION**

(57)    This application provides a cell reselection method and an apparatus. The method includes: measuring a target frequency to obtain at least two cells that meet a first condition; determining remaining coverage time of the at least two cells; and determining a target cell based on the remaining coverage time of the at least two cells. According to this solution, the target cell (that is, a reselected cell) is determined based on the remaining coverage time during reselection, so that a terminal device can reselect an appropriate cell as much as possible and unnecessary frequent reselection is avoided. This reduces energy consumption of the terminal device and improves efficiency of cell reselection in a communication scenario based on a high-altitude mobile platform.

Measure a target frequency to obtain at least two cells that meet a first condition — 401a

Determine remaining coverage time of the at least two cells — 402a

Determine a target cell based on the remaining coverage time of the at least two cells — 403a

FIG. 4A

EP 4 024 947 A1

## Description

## TECHNICAL FIELD

This application relates to the field of mobile communication technologies, and in particular, to a cell reselection method and an apparatus.

## BACKGROUND

Because a conventional terrestrial network cannot provide seamless coverage for a terminal device, especially in places where a network device cannot be deployed, such as the sea, desert, or air, a non-terrestrial network (Non-terrestrial network, NTN) is introduced into a fifth generation (5th generation, 5G) system. The non-terrestrial network provides the seamless coverage for the terminal device by deploying the network device or some functions of the network device on a high-altitude mobile platform (for example, a satellite, a mobile unmanned aerial vehicle, or a mobile hot air balloon). In addition, the high-altitude mobile platform is less subject to natural disasters. This improves reliability of the 5G system.

When the high-altitude mobile platform continuously runs, a near-far effect of a quality distribution of a cell of the network device on the high-altitude mobile platform is not obvious (to be specific, because the network device on the high-altitude mobile platform is far away from the terminal device, cell quality of the terminal device is not significantly affected due to movement of the terminal device). This leads to inefficiency in performing reselection only based on the cell quality based on a current method.

Therefore, a cell reselection method for improving efficiency in a communication scenario based on the high-altitude mobile platform is urgently needed.

## SUMMARY

This application provides a cell reselection method and an apparatus, to improve efficiency of cell reselection performed in a communication scenario based on a high-altitude mobile platform.

According to a first aspect, this application provides a cell reselection method. The method includes: measuring a target frequency to obtain at least two cells that meet a first condition; determining remaining coverage time of the at least two cells; and determining a target cell based on the remaining coverage time of the at least two cells. According to this solution, the target cell (that is, a reselected cell) is determined based on the remaining coverage time of the at least two cells during reselection, so that a terminal device can reselect an appropriate cell as much as possible and unnecessary frequent reselection is avoided. This reduces energy consumption of the terminal device and improves efficiency of cell reselection in a communication scenario based on a high-altitude mobile platform.

In some possible implementations, the determining a target cell based on the remaining coverage time of the at least two cells includes: determining a cell with longest remaining coverage time in the at least two cells as the target cell. According to this solution, the target cell is determined based on the remaining coverage time, so that the terminal device does not frequently perform reselection. This reduces energy consumption of the terminal device and improves the efficiency of the cell reselection in the communication scenario based on the high-altitude mobile platform.

In some possible implementations, the determining a target cell based on the remaining coverage time of the at least two cells includes: determining, based on the remaining coverage time and a coverage time threshold of the at least two cells, a cell whose remaining coverage time is greater than or equal to the coverage time threshold as a candidate cell; and determining the target cell based on cell quality of the candidate cell. According to this solution, the remaining coverage time is used as a reference factor for selecting the target cell, so that the terminal device does not frequently perform reselection. This reduces energy consumption of the terminal device. In addition, cell quality is used as a reference factor for selecting the target cell, so that a cell with good quality can be selected as the target cell. This helps improve communication quality.

In some possible implementations, the determining the target cell based on cell quality of the candidate cell includes: determining a cell with best cell quality in the candidate cell as the target cell; or determining a comprehensive value of each cell in the candidate cell based on the cell quality of the candidate cell and remaining coverage time of the candidate cell, and determining the target cell based on the comprehensive value of each cell.

In some possible implementations, reselection configuration information is received from a network device, where the reselection configuration information includes the coverage time threshold.

In some possible implementations, before the measuring a target frequency to obtain at least two cells that meet a first condition, the method includes: determining remaining coverage time of a serving cell of the terminal device; and determining, based on the remaining coverage time and a reselection trigger time threshold, to perform the cell reselection. According to this solution, triggering the cell reselection based on the remaining coverage time of the serving cell of the terminal device helps avoid cell reselection that is frequently triggered or cannot be triggered in time. Therefore, this solution can improve the communication quality of the terminal device.

In some possible implementations, the determining to perform cell reselection based on the remaining coverage time and a reselection trigger time threshold includes: determining that the remaining coverage time of the serving cell is less than or equal to the reselection trigger time threshold, and determining to perform the cell reselection.

In some possible implementations, the determining to perform cell reselection based on the remaining coverage time and a reselection trigger time threshold includes: determining, based on the remaining coverage time, the reselection trigger time threshold, cell quality of the serving cell, and a reselection trigger quality threshold, to perform the cell reselection. According to this solution, whether to perform the cell reselection is determined based on the remaining coverage time of the service cell and the cell quality. This improves accuracy of determining reselection trigger time and the communication quality of the terminal device.

In some possible implementations, the determining, based on the remaining coverage time, the reselection trigger time threshold, cell quality of the serving cell, and a reselection trigger quality threshold, to perform the cell reselection includes: determining that the remaining coverage time is less than or equal to the reselection trigger time threshold and the cell quality of the serving cell is less than or equal to the reselection trigger quality threshold, and determining to perform the cell reselection.

In some possible implementations, it is determined that the reselection trigger quality threshold is greater than a first threshold.

In some possible implementations, the determining, based on the remaining coverage time, the reselection trigger time threshold, cell quality of the serving cell, and a reselection trigger quality threshold, to perform the cell reselection includes: determining that the remaining coverage time is less than or equal to the reselection trigger time threshold or the cell quality of the serving cell is less than or equal to the reselection trigger quality threshold, and determining to perform the cell reselection.

In some possible implementations, it is determined that the reselection trigger quality threshold is less than a second threshold.

In some possible implementations, the reselection trigger time threshold is received from the network device.

According to a second aspect, this application provides a cell reselection method. The method includes: determining remaining coverage time of a serving cell of a terminal device; and determining, based on the remaining coverage time and a reselection trigger time threshold, whether to perform cell reselection. According to this solution, triggering the cell reselection based on the remaining coverage time of the serving cell of the terminal device helps avoid cell reselection that is frequently triggered or cannot be triggered in time. Therefore, this solution can improve communication quality of the terminal device and efficiency of cell reselection in a communication scenario based on a high-altitude mobile platform.

In some possible implementation methods, the determining, based on the remaining coverage time and a reselection trigger time threshold, whether to perform cell reselection includes: determining that the remaining coverage time of the serving cell is less than or equal to the reselection trigger time threshold, and determining to perform the cell reselection.

In some possible implementation methods, the determining, based on the remaining coverage time and a reselection trigger time threshold, whether to perform cell reselection includes: determining, based on the remaining coverage time, the reselection trigger time threshold, cell quality of the serving cell, and a reselection trigger quality threshold, whether to perform the cell reselection. According to this solution, whether to perform the cell reselection is determined based on the remaining coverage time of the service cell and the cell quality. This improves accuracy of determining reselection trigger time and the communication quality of the terminal device.

In some possible implementation methods, the determining, based on the remaining coverage time, the reselection trigger time threshold, cell quality of the serving cell, and a reselection trigger quality threshold, whether to perform the cell reselection includes: determining that the remaining coverage time is less than or equal to the reselection trigger time threshold and the cell quality of the serving cell is less than or equal to the reselection trigger quality threshold, and determining to perform the cell reselection.

In some possible implementation methods, it is determined that the reselection trigger quality threshold is greater than a first threshold.

In some possible implementation methods, the determining, based on the remaining coverage time, the reselection trigger time threshold, cell quality of the serving cell, and a reselection trigger quality threshold, whether to perform the cell reselection includes: determining that the remaining coverage time is less than or equal to the reselection trigger time threshold or the cell quality of serving cell is less than or equal to the reselection trigger quality threshold, and determining to perform the cell reselection.

In some possible implementation methods, it is determined that the reselection trigger quality threshold is less than a second threshold.

In some possible implementation methods, the reselection trigger time threshold is received from a network device.

According to a third aspect, this application provides a cell reselection method. The method includes: A network device sends reselection configuration information to a terminal device, where the reselection configuration information includes a coverage time threshold, and the coverage time threshold is used by the terminal device to determine a target cell.

In some possible implementation methods, the network device may further send a reselection trigger time threshold to the terminal device, where the reselection trigger time threshold is used by the terminal device to determine whether to perform cell reselection.

According to a fourth aspect, this application provides a cell reselection method. The method includes: a network device sends a reselection trigger time threshold to a terminal device, where the reselection trigger time threshold is used by the terminal device to determine whether to perform cell reselection.

According to a fifth aspect, this application provides a communication apparatus. The apparatus has functions of implementing the method in any one of the first aspect or the second aspect. The functions may be implemented by hardware, or may be implemented by hardware executing corresponding software. The hardware or software includes one or more units or modules corresponding to the foregoing functions.

In a possible design, the communication apparatus includes a processor, a memory, a bus, and a communication interface. The memory stores computer-executable instructions. The processor is connected to the memory by using the bus. When the apparatus runs, the processor executes the computer-executable instructions stored in the memory, so that the apparatus performs the cell reselection method in any one of the first aspect, any one of the implementations of the first aspect, the second aspect, or any one of the implementations of the second aspect. For example, the apparatus may be a terminal device.

In another possible design, the communication apparatus may alternatively be a chip, for example, a chip of a terminal device. The chip includes a processing unit, and optionally further includes a storage unit. The chip may be configured to perform the cell reselection method in any one of the first aspect, any one of the implementations of the first aspect, the second aspect, or any one of the implementations of the second aspect.

According to a sixth aspect, this application provides a communication apparatus. The apparatus has functions of implementing the method in any one of the third aspect or the fourth aspect. The functions may be implemented by hardware, or may be implemented by hardware executing corresponding software. The hardware or software includes one or more units or modules corresponding to the foregoing functions.

In a possible design, the communication apparatus includes a processor, a memory, a bus, and a communication interface. The memory stores computer-executable instructions and the processor is connected to the memory by using the bus. When the apparatus runs, the processor executes the computer-executable instructions stored in the memory, so that the apparatus performs the cell reselection method in any one of the third aspect, any one of the implementations of the third aspect, the fourth aspect, or any one of the implementations of the fourth aspect. For example, the apparatus may be a network device.

In another possible design, the communication apparatus may alternatively be a chip, for example, a chip of a network device. The chip includes a processing unit, and optionally further includes a storage unit. The chip may be configured to perform the cell reselection method in any one of the third aspect, any one of the implementations of the third aspect, the fourth aspect, or any one of the implementations of the fourth aspect.

According to a seventh aspect, this application provides a computer storage medium. The computer storage medium stores computer software instructions used by the foregoing terminal device. The computer software instructions include a program designed to perform any one of the foregoing aspects.

According to an eighth aspect, this application provides a computer storage medium. The computer storage medium stores computer software instructions used by the foregoing network device. The computer software instructions include a program designed to perform any one of the foregoing aspects.

According to a ninth aspect, this application provides a computer program product. The computer program product includes computer software instructions, where the computer software instructions may be loaded by a processor to implement a procedure in the cell reselection method in any one of the foregoing aspects or any one of the implementations of the aspects.

According to a tenth aspect, this application provides a cell reselection system. The cell reselection system includes a terminal device and a network device. The network device is configured to send reselection configuration information to the terminal device, where the reselection configuration information includes a coverage time threshold. The terminal device is configured to: measure a target frequency to obtain at least two cells that meet a first condition; determine remaining coverage time of the at least two cells; and determine a target cell based on the remaining coverage time of the at least two cells and the coverage time threshold.

According to an eleventh aspect, this application provides a cell reselection system. The cell reselection system includes a terminal device and a network device. The network device is configured to send a reselection trigger time threshold to the terminal device. The terminal device is configured to: determine a remaining coverage time of a serving cell of the terminal device; and determine, based on the remaining coverage time and the reselection trigger time threshold, whether to perform cell reselection.

**BRIEF DESCRIPTION OF DRAWINGS**

FIG. 1 is a schematic diagram depicting a possible network architecture according to this application;
FIG. 2 is a schematic diagram of a satellite transparent forwarding mode;
FIG. 3 is a schematic diagram of a satellite regenerative mode;

FIG. 4A is a flowchart of a cell reselection method according to this application;

FIG. 4B is a flowchart of still another cell reselection method according to this application;

FIG. 5 is a schematic diagram of a communication apparatus according to this application;

FIG. 6 is a schematic diagram of another communication apparatus according to this application; and

FIG. 7 is a schematic diagram of a terminal device according to this application.

## DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of' means two or more than two.

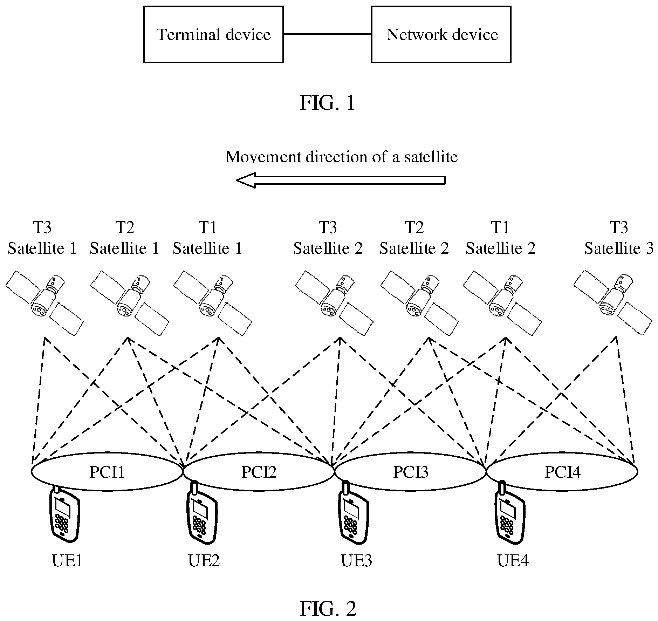

FIG. 1 is a schematic diagram depicting a network architecture applicable to this application. The network architecture includes a terminal device and a network device. The network device is deployed on a high-altitude mobile platform. For example, a satellite, a hot air balloon, or a mobile unmanned aerial vehicle. The terminal device communicates with the network device through a wireless interface.

The terminal device is a device having a wireless transceiver function. The terminal device may be deployed on land, including an indoor device, an outdoor device, a hand-held device, or a vehicle-mounted device. The terminal may also be deployed on a water surface (for example, on a ship), and may also be deployed in air (for example, in an airplane, a balloon, or a satellite). The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), or a wireless terminal device in a smart home (smart home). The terminal device may further include user equipment (user equipment, UE) and the like.

The network device is a device in a wireless network. For example, the terminal device is connected to a radio access network (radio access network, RAN) node of the wireless network. Currently, examples of some RAN nodes are a gNB, a transmission reception point (transmission reception point, TRP), an evolved NodeB (evolved NodeB, eNB), a radio network controller (radio network controller, RNC), a nodeB (Node B, NB), a base station controller (base station controller, BSC), a base transceiver station (base transceiver station, BTS), a home base station (for example, a home evolved NodeB or a home NodeB, HNB), a base band unit (base band unit, BBU), a wireless fidelity (wireless fidelity, Wi-Fi) access point (access point, AP), or integrated access and backhaul (integrated access and backhaul, IAB), or the like. In a network structure, the network device may include a centralized unit (centralized unit, CU) node, a distributed unit (distributed unit, DU) node, or a RAN device including a CU node and a DU node. In a network structure, the centralized unit CU node may be divided into a control plane (CU-CP) and a user plane (CU-UP). The CU-CP is responsible for a control plane function, and mainly includes RRC and PDCP-C. The PDCP-C entity is mainly responsible for control plane data encryption and decryption, integrity protection, data transmission, and the like. The CU-UP is responsible for a user plane function, and mainly includes an SDAP entity and a PDCP-U entity. The SDAP is mainly responsible for processing data of a core network and mapping a flow to a bearer. The PDCP-U is mainly responsible for data plane encryption and decryption, integrity protection, header compression, serial number maintenance, data transmission, and the like. The CU-CP is connected to the CU-UP through an E1 interface. The CU-CP indicates that the gNB is connected to the core network through the Ng interface. The CU-CP is connected to the DU through F1-C (a control plane). The CU-UP is connected to the DU through F1-U (a user plane). Certainly, in another possible implementation, the PDCP-C is alternatively on the CU-UP. It should be noted that the network device in this application is deployed in a non-terrestrial communication system (non-terrestrial network, NTN).

The NTN system may include a satellite communication system, a high altitude platform station (high altitude platform station, HAPS) communication system, or another non-terrestrial communication system.

For ease of description and understanding of the solutions of the present invention, an NTN communication system in which the network device is deployed on a satellite is used as an example for the following description in this application. In addition, for ease of description, "the network device on a satellite" is hereinafter replaced with "satellite" in this application. In other words, communication between the terminal device and the satellite described in this application actually refers to communication between the terminal device and the network device on the satellite. A unified description is provided herein, and details are not described again.

A satellite system can be classified into the following three types based on a satellite height, that is, a satellite orbit height:

(1) High-earth orbit (Geostationary-Earth Orbit, GEO) satellite: It is also referred to a geostationary satellite. The satellite moves at a same speed as an earth's rotation system. Therefore, the satellite remains stationary relative to ground. Correspondingly, a cell of the GEO satellite is also stationary. A coverage area of the GEO satellite cell is large. For example, a cell diameter may be 500 km.

(2) Low-earth orbit (Low-Earth Orbit, LEO) satellite: The satellite, at a speed of about 7 km/s, moves fast relative to ground. Therefore, a service coverage area provided by the LEO satellite also moves.

(3) Medium-earth orbit satellite: is a satellite between a high-earth orbit satellite and low-earth orbit satellite. The satellite in this application may be the low-earth orbit satellite, or may be expanded to the medium-earth orbit satellite or another mobile network device. For ease of description, the foregoing satellites are hereinafter referred to as satellites for short in embodiments of this application.

The satellite provides a service coverage area in either of the following modes:

A first mode is a transparent (transparent) forwarding mode. The satellite forwards information about a cell of a terrestrial network device (for example, a base station). If connection between the satellite and an original network device exists when the satellite moves, a cell of the original network device follows the satellite for a while (that is, the connection remains for a period of time). When the satellite is connected to a new network device, the satellite forwards information about a cell of the new network device. In the transparent forwarding mode, the satellite receives signals from a terrestrial network device and forwards the signals to ground. In this case, although the satellite keeps running, a location of the terrestrial network device remains unchanged. Therefore, a cell in the terrestrial network forwarded by the satellite also moves with the running of the satellite. However, a movement range of the cell is around a periphery of the network device.

FIG. 2 is a schematic diagram of the satellite transparent forwarding mode. This figure illustrates an ideal scenario. That is, when a terrestrial cell is completely stationary and one satellite moves, another satellite completely covers a previous cell area. A mapping manner of a terrestrial stationary cell means that a location of a cell is stationary on the ground, and a moving satellite may adjust its own beams to form these cells. The following is an example.

In a possible design, a cell may be identified by using a physical cell identifier (Physical Cell Identifier, PCI) or a global cell identifier (cell global identifier, CGI). It should be noted that the following cell 1 to cell 4 refer to cells of a terrestrial network device.

Moment T1: Cell 1 and cell 2 are covered by a beam of satellite 1, and cell 3 and cell 4 are covered by a beam of satellite 2.

Moment T2: Although both the satellite 1 and satellite 2 move leftwards, they can still adjust their beams to ensure coverage of cell 1 to cell 4.

Moment T3: Compared with the moment T1, the satellite 1 and satellite 2 have moved a sufficient distance. The satellite 1 cannot provide coverage for the cell 2 by adjusting beams. The satellite 2 cannot provide coverage for the cell 4 by adjusting beams. In this case, the satellite 2 can provide coverage for the cell 2. The satellite 3 may provide coverage for the cell 4. That is, the cell 1 is covered by the beam of satellite 1, the cell 2 and cell 3 are covered by the beam of satellite 2, and the cell 4 is covered by a beam of satellite 3.

Generally, because two satellites have different running directions, beam transmission directions, and beam transmission capabilities, they cannot have a same terrestrial coverage area.

A second mode is a regenerative (regenerative) mode, that is, the satellite may generate cell information by itself.

For example, the satellite in this mode may be a DU, a base station, an IAB, or a network device with a similar function. As the satellite moves, a generated cell follows along on the ground.

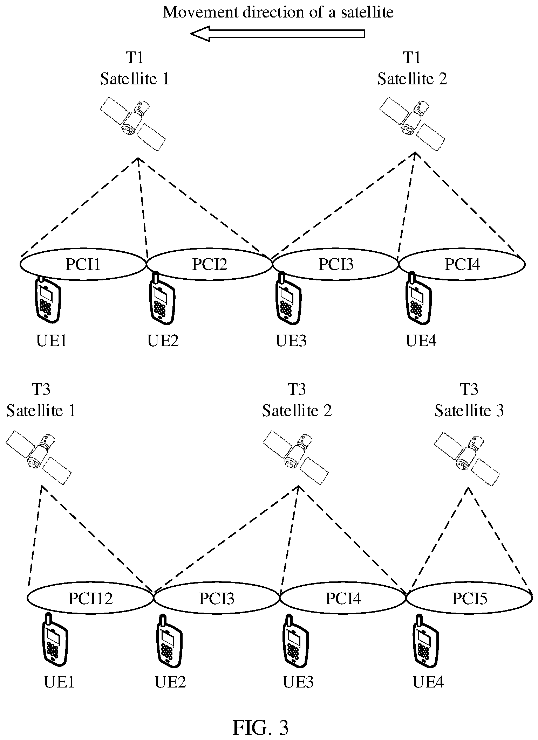

FIG. 3 is a schematic diagram of the satellite regenerative mode. It should be noted that the following cell 1 to cell 5 refer to cells of a satellite.

Moment T1: An area is covered by the cell 1 to cell 4 of satellite 1 and satellite 2.

Moment T3: This area is covered by the cell 2 to cell 5 of the satellite 1, the satellite 2, and satellite 3.

For satellites in the foregoing two forwarding modes, when a satellite cell keeps running, for a terminal device that supports a global navigation satellite system (global navigation satellite system, GNSS), it is preferred in a standard that the terminal device performs cell reselection based on location information (UE location) of the terminal device and a satellite track (satellite ephemeris). However, a near-far effect of mass distribution of satellite cells is not obvious (that is, because the satellite is far away from the terminal device, movement of the terminal device does not significantly change quality of service of the satellite). Therefore, in a reselection process, the terminal device performs R-criterion sorting on a plurality of candidate cells that meet an S criterion only based on quality, and may reselect a target cell that quickly moves. For example, the terminal device is located in a serving cell. When performing the reselection, if the terminal device measures both a target cell 1 and a target cell 2, and quality of both the target cell 1 and the target cell 2 meet the S criterion of the reselection process, the terminal device determines, based on the R criterion, that cell quality of the target cell 1 is higher than cell quality of the target cell 2. However, because the satellite moves, the target cell 1 may be quickly moved. That is, the target cell 1 cannot provide a service for the terminal device. As a result, the terminal device needs to perform the cell reselection again. This increases energy consumption of the terminal device and wastes resources. For the S criterion and the R criterion, refer to related descriptions in the 3rd Generation Partnership Project (the 3rd generation partnership project, 3GPP) 38.304 v15.4.0 protocol related to a 5G.

Therefore, when a cell reselection procedure in the conventional technology is applied to a high-altitude mobile platform scenario, the following problems exist: Because the near-far effect of a cell in the network device of the high-altitude mobile platform is not obvious, the reselection is performed only based on candidate cell quality measured in the reselection process. This may cause unnecessary power consumption of the terminal device and a waste of resources.

Embodiments of this application can resolve the foregoing problem. It should be noted that the embodiments of this application are described by using a 5G communication scenario as an example. However, the embodiments of this application are not limited to the 5G communication scenario, and may be further applied to another communication scenario, for example, the 4th generation (the 4th generation, 4G) communication scenario, future communication scenario, or the like.

Before the embodiments of this application are described, for ease of understanding this application, the following first briefly describes a cell selection and a cell reselection process in the 5G scenario in the conventional technology.

1. Cell selection

At present, when the terminal device is powered on or a radio link failure occurs, the terminal device performs a cell search process and selects a suitable cell to camp on as soon as possible. This process is referred to as "cell selection".

2. Cell reselection

After the terminal device camps on a cell, with movement of the terminal device, the terminal device may need to move to another cell having a higher priority or better signal strength. This is a cell reselection process.

When the terminal device measures a plurality of cells that meet a reselection criterion, the terminal device sorts the cells by ranking values (which may also be referred to as R values). For example, for frequencies or systems with the same priority, if the plurality of cells meet the reselection criterion, ranking may be performed based on cell quality. Generally, the terminal device performs cell reselection and finds a cell with a highest ranking value. For details about how the terminal device reselects the cell with the highest ranking value and further determines whether the cell is suitable, refer to descriptions in the 3GPP protocol TS 38.304 v15.4.0.

In addition, optionally, in the 5G scenario or a scenario in which a cell has a beam (beam), when performing the cell reselection, the terminal device may not simply reselect a cell ranked top. For example, cells whose differences between their ranking values and a highest ranking value found during sorting are within a specific range (for example, x dB, where x is configurable) are considered as similar (similar) cells. In these similar cells, the terminal device reselects a cell that has a maximum quantity of good beams (good beams). To be specific, in an implementation method of this embodiment of this application, the cell quality may refer to the R value of the cell, that is, cell quality between different cells is evaluated based on the R value of the cell. In another implementation method, the cell quality may further refer to the R value and a beam of the cell, that is, the cell quality between different cells is evaluated based on the R value and the beam of the cell.

In a possible manner, the beam may be understood as a space resource, and may be a transmit or receive precoding vector having energy transmission directivity.

The energy transmission directivity may indicate that precoding processing is performed, by using the precoding vector, on a signal that needs to be sent, a signal on which the precoding processing is performed has spatial directivity, and a signal on which the precoding processing is performed by using the precoding vector has good received power, for example, satisfies a received demodulation signal-to-noise ratio. The energy transmission directivity may alternatively indicate that receiving, by using the precoding vector, same signals sent from different spatial positions and having different received powers.

The transmit or receive precoding vector can be identified by using index information. The index information may correspond to a resource identity (identity, ID) configured for the terminal device. For example, the index information may correspond to a reference signal identifier and a reference signal resource that are configured. The reference signal may be used for channel measurement, channel estimation, or the like. The reference signal resource may be used to configure transmission attributes of the reference signal, for example, a time-frequency resource position, a port mapping relationship, a power factor, and a scrambling code. For details, refer to a current technology. A transmit end device may send the reference signal based on the reference signal resource, and a receive end device may receive the reference signal based on the reference signal resource.

The reference signal may include, for example, a channel state information reference signal (channel state information reference signal, CSI-RS), a synchronization signal block (synchronization signal block, SSB), and a sounding reference signal (sounding reference signal, SRS). Correspondingly, the reference signal resource may include a CSI-RS resource (CSI-RS resource), an SSB resource, and an SRS resource (SRS resource). To distinguish between different reference signal resources, each reference signal resource may correspond to an identifier of the reference signal resource. For example, CSI-RS resources are distinguished by using CSI-RS identifiers (for example, CSI-RS indexes), SSB resources are distinguished by using SSB identifiers (for example, SSB indexes), and SRS resources are distinguished by using SRS resource identifiers (for example, SRS resource IDs).

It should be noted that configuration parameters of a currently camped cell and a neighboring cell are broadcast in a system message of the currently camped cell, so that the terminal device can obtain, through calculation, parameters such as a ranking value corresponding to the cell. A maximum of N beams for each cell whose signal strength is higher than a threshold are used to generate cell quality (cell quality), and the cell quality is used as Qmeas after layer 3 filtering. The threshold and N may be notified to the terminal device in a broadcast message, a unicast message, or a multicast message. A beam whose beam quality is higher than the threshold is considered as a good beam.

With reference to the architecture shown in FIG. 1 and the scenario shown in FIG. 2 or FIG. 3, the following provides an implementation solution for resolving the foregoing problem.

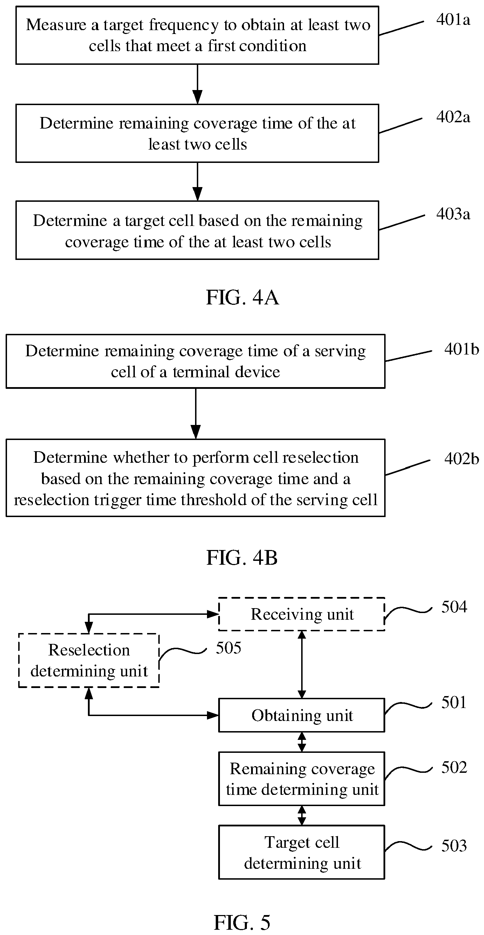

FIG. 4A shows a cell reselection method according to this application. The method is used to resolve a problem in the foregoing cell reselection method in the conventional technology. This embodiment of this application may be applicable to a terminal device that needs to perform cell reselection, for example, a terminal device in an idle state or an inactive state. The method may be performed by a terminal device or a component (for example, a chip or a circuit) used in the terminal device.

The method may include the following steps.

Step 401a: Measure a target frequency to obtain at least two cells that meet a first condition.

The first condition herein refers to a criterion used for reselection, and the first condition is used to screen and obtain one or more cells that meet a specific quality requirement. In an example, the first condition may be that cell quality meets a specific threshold. The threshold herein may be 0, or another value preset by a system or configured by a network device. "Meets a specific threshold" may be that the cell quality is greater than or equal to the threshold or the cell quality is less than or equal to the threshold. The first condition may also be referred to as a reselection criterion, a reselection condition, a reselection standard, or the like. This is not limited in this application. It may be understood that cell quality in this embodiment of this application may be initial quality determined by the terminal through measurement or a variant based on the initial quality.

For example, the network device is deployed on a satellite. In this case, the terminal device may measure the target frequency based on location information of the terminal device and a satellite orbit, to obtain the at least two cells that meet the first condition. The satellite orbit herein refers to orbit information of the satellite. The target frequency may be at least one of an intra-frequency, inter-frequency, or inter-RAT neighboring frequency. It may be understood that the definitions of the intra-frequency, inter-frequency, and inter-RAT are described with respect to information about a current serving cell of the terminal device. In a possible manner, the terminal device may determine the target frequency based on reselection configuration information in a system message.

Step 402a: Determine remaining coverage time of the at least two cells.

In this application, a cell of the network device is a mobile cell. Therefore, coverage of the terminal device by the cell has a time range. Alternatively, it is understood that as the cell moves, the cell does not cover the terminal device, that is, the terminal device is outside the coverage of the cell. Therefore, for a terminal device, coverage of each cell has a coverage time.

For example, the network device is deployed on a satellite. In this case, the terminal device may determine the remaining coverage time of the at least two cells based on the location information of the terminal device and the satellite orbit. Alternatively, the terminal device may determine the remaining coverage time of the at least two cells based on the location information of the terminal device, the satellite orbit, and a movement direction of the terminal device. A manner of determining the remaining coverage time of the cell is not limited in this embodiment of this application.

It should be noted that the remaining coverage time in this application may also be referred to as a remaining cell coverage time or the like. A unified description is provided herein, and details are not described elsewhere.

Step 403a: Determine a target cell based on the remaining coverage time of the at least two cells.

The target cell herein refers to a cell to which the terminal device is to be reselected, or a cell on which the terminal device is to camp.

A method for determining the target cell based on the remaining coverage time of the at least two cells includes but is not limited to the following methods.

Method A1: Determine a cell with a longest remaining coverage time in the at least two cells as the target cell.

For example, cells that meet the first condition include a cell 1, a cell 2, a cell 3, a cell 4, and a cell 5. If remaining coverage time periods of the cell 1, the cell 2, the cell 3, the cell 4, and the cell 5 for the terminal device are respectively T1, T2, T3, T4, and T5, and T1 > T2 > T3 > T4 > T5, it is determined that the cell 1 is the target cell. It may be understood that if a cell corresponding to the longest remaining coverage time includes at least two cells, the terminal device may further determine the target cell based on the cell quality, or may randomly determine one cell as the target cell, or determine the target cell based on an implementation of the terminal device.

Method A2: Determine, based on the remaining coverage time and coverage time thresholds of the at least two cells, a cell whose remaining coverage time is greater than or equal to the coverage time threshold as a candidate cell, and determine the target cell based on cell quality of the candidate cell.

For example, cells that meet the first condition include a cell 1, a cell 2, a cell 3, a cell 4, and a cell 5. Remaining coverage time periods of the cell 1, the cell 2, the cell 3, the cell 4, and the cell 5 for the terminal device are respectively T1, T2, T3, T4, and T5. Then, T1, T2, T3, T4, and T5 are compared with the coverage time threshold (denoted as ThT). Assuming that T1, T2, T3, and T4 are all greater than ThT, and T5 is less than ThT, it is determined that the candidate cell includes the cell 1, the cell 2, the cell 3, and the cell 4. Then, the target cell is determined from the candidate cell based on cell quality of each cell in the candidate cell.

A method for determining the target cell based on cell quality of the candidate cell includes but is not limited to the following methods:

Method A2.1: Determine a cell with best cell quality in the candidate cell as the target cell.

Next, in the foregoing example, assuming that quality of the cell 1 in the candidate cell {cell 1, cell 2, cell 3, and cell 4} is the best, it is determined that the cell 1 is the target cell.

It should be noted that, the method for determining the cell with the best cell quality includes but is not limited to the following methods:

In a first method, an R value of each cell in the candidate cell is measured (for details, see descriptions of cell reselection) and a cell with a largest R value is determined as the target cell.

For example, it is assumed that the R value of the cell 1 in the candidate cell {cell 1, cell 2, cell 3, and cell 4} is the largest. The cell 1 is the cell with the best cell quality. Therefore, the cell 1 is the target cell.

In a second method, an R value of each cell in the candidate cell is measured, a cell with a maximum R value is determined, and a cell in the candidate cell whose difference from the maximum R value is within a preset range is determined. These cells may be referred to as similar (similar) cells. A cell with a largest quantity of good beams is selected from these similar cells as the target cell.

For example, it is assumed that the R value corresponding to each cell in the candidate cell {cell 1, cell 2, cell 3, and cell 4} is R1, R2, R3, and R4, and R2 > R1 > R3 > R4. Assuming that a difference between R1 and R2 is within the preset range, a difference between R3 and R2 is within the preset range, and a difference between R4 and R2 is outside the preset range, the target cell is selected from the cell 1, the cell 2, and the cell 3. Further, assuming that quantities of good beams of the cell 1, the cell 2, and the cell 3 are 5, 4, and 3, the cell 1 is finally selected as the target cell. It can be learned that although the R value of the cell 2 is the largest, in combination with the quantity of good beams, cell quality of the cell 1 is better and more stable. Therefore, the cell 1 is selected as the target cell. It may be understood that if the quantities of good beams of the cell 1, the cell 2, and the cell 3 are 5, 4, and 5, the cell 1 is finally selected as the target cell. That is, quality of both the cell 1 and the cell 3 is better. Determining is further performed based on the good beam. Because they have the same quantity of good beams, the terminal device selects the cell 1 again as the target cell based on the R value of the cell.

Method A2.2: Determine a comprehensive value of each cell in the candidate cell based on the cell quality of the candidate cell and the remaining coverage time of the candidate cell, and determine a target cell based on the comprehensive value of each cell.

In this method, the cell quality and the remaining coverage time of the candidate cell are comprehensively considered, the comprehensive value of each cell in the candidate cell is calculated, and the cell with the best comprehensive value is selected as the target cell.

An example of calculation is given below.

$$R_x = w * \frac{T_x}{\sum_{i=1}^{N} T_i} + (1-w) * \frac{Q_x}{\sum_{i=1}^{N} Q_i},$$

where

$R_x$ is a comprehensive value (which may also be referred to as a ranking value) of a cell x in the candidate cell; w is a preset weight value or a weight value configured by a network device; $T_x$ is remaining coverage time of the cell x; $\sum_{i=1}^{N} T_i$ is a sum of remaining coverage time of all cells (N in total) in the candidate cell; $Q_x$ is cell quality of cell x; $\sum_{i=1}^{N} Q_i$ is a sum of cell quality of all the cells (N in total) in the candidate cell, and N is an integer greater than 1. In some possible solutions, "all cells in the candidate cell" may include cells having a same priority, or a cell set that needs to be sorted to determine the target cells.

Method A3: Determine the target cell based on remaining coverage time and coverage time thresholds of the at least two cells.

For example, cells that meet a first condition include a cell 1, a cell 2, a cell 3, a cell 4, and a cell 5. Remaining coverage time periods of the cell 1, the cell 2, the cell 3, the cell 4, and the cell 5 for the terminal device are respectively T1, T2, T3, T4, and T5. Then, T1, T2, T3, T4, and T5 are compared with the coverage time threshold (denoted as ThT). Assuming that T1 and T2 are both greater than ThT, and T3, T4, and T5 are all less than ThT, a cell may be selected from the cell 1 and the cell 2 as the target cell. For example, the cell 1 or the cell 2 is randomly selected as the target cell, or the cell 1 or the cell 2 is selected as the target cell based on an implementation of the terminal device.

It may be understood that, in an implementation, the network device may indicate the terminal device to determine the target cell by using the method A1, the method A2, or the method A3.

In an implementation method, the terminal device may further receive reselection configuration information from the network device. The reselection configuration information may be periodically sent by the network device, or may be sent based on a request of the terminal device. Optionally, the reselection configuration information includes the coverage time threshold (ThT) of the target cell. Alternatively, the coverage time threshold may be predefined in a protocol. In this implementation, the reselection configuration information may not need to carry the coverage time threshold.

According to the foregoing solution, the remaining coverage time is introduced in a reselection process as a factor for determining the target cell (that is, a reselected cell), so that the terminal device can reselect an appropriate cell as much as possible and unnecessary frequent reselection is avoided. This reduces energy consumption of the terminal device and improves efficiency of cell reselection in a communication scenario based on a high-altitude mobile platform.

In addition, currently, triggering the terminal device to perform cell reselection is also based on cell quality of the serving cell. That is, when the quality of the serving cell meets the trigger condition, the terminal device is triggered to perform cell reselection. In a satellite cell scenario, a cell quality difference between different cells is not obvious due to a near-far effect. Therefore, reselection is triggered only based on cell quality. When a reselection trigger quality threshold is set to a small value, the reselection may not be performed in time. For example, reselection is triggered only after a satellite covering a serving cell has moved. This results in poor communication quality. When the reselection trigger quality threshold is set to a large value, the reselection may be easily triggered, that is, the reselection is too frequent. Communication quality also deteriorates.

Therefore, in a cell reselection method in the conventional technology, the following problem exists: Because a near-far effect of a cell of a network device based on a high-altitude mobile platform is not obvious, reselection is triggered only based on cell quality of a serving cell, and communication quality may deteriorate.

FIG. 4B shows still another cell reselection method according to this application. The method is used to resolve this problem. This embodiment of this application may be applicable to a terminal device that needs to perform cell reselection, for example, a terminal device in an idle state or an inactive state. The method may be performed by a terminal device or a component (for example, a chip or a circuit) used in the terminal device.

The method may include the following steps.

Step 401b: Determine remaining coverage time of a serving cell of the terminal device.

For a method for determining the remaining coverage time of the serving cell of the terminal device, refer to related descriptions in the embodiment in FIG. 4A.

Step 402b: Determine whether to perform the cell reselection based on the remaining coverage time and a reselection trigger time threshold.

According to this solution, triggering the cell reselection based on the remaining coverage time of the serving cell of the terminal device helps avoid cell reselection that is frequently triggered or cannot be triggered in time. Therefore, this solution can improve the communication quality of the terminal device.

In step 402b, a method for determining, based on the remaining coverage time and the reselection trigger time threshold, whether to perform cell reselection includes but is not limited to the following methods.

Method B1: Determine that the remaining coverage time of the serving cell is less than or equal to the reselection trigger time threshold, and determine to perform the cell reselection.

To be specific, when the remaining coverage time of the serving cell is less than or equal to the reselection trigger time threshold, the cell reselection is triggered.

Method B2: Determine, based on the remaining coverage time, the reselection trigger time threshold, cell quality of the serving cell, and a reselection trigger quality threshold, whether to perform the cell reselection.

In this method, whether the remaining coverage time reaches the reselection trigger time threshold and whether the cell quality of the serving cell reaches the reselection trigger quality threshold are both considered.

It may be understood that, in an implementation, a network device may indicate the terminal device to determine whether to perform the cell reselection by using the method B1 or the method B2.

A specific implementation method of the method B2 includes but is not limited to the following methods: Method B2.1: Determine that the remaining coverage time is less than or equal to the reselection trigger time threshold, and determine that the cell quality of the serving cell is less than or equal to the reselection trigger quality threshold, and determine to perform the cell reselection.

In this method, the cell reselection is determined to perform only when both of a condition 1 (the remaining coverage time of the serving cell is less than or equal to the reselection trigger time threshold) and a condition 2 (the cell quality of the serving cell is less than or equal to the reselection trigger quality threshold) are met.

For example, the method may be applied to the following scenario: When it is determined that the reselection trigger quality threshold is greater than a preset first threshold, or when it is determined that the reselection trigger quality threshold is greater than or equal to the preset first threshold, it is determined, by using the method B2.1, whether to perform the cell reselection.

This is because: When the reselection trigger quality threshold is set to a larger value (specifically, greater than or equal to a first threshold), because of a near-far effect, cell quality of cells measured by the terminal device has little difference. Therefore, if the cell reselection is triggered based on only a cell quality factor, it is easy to trigger the cell reselection. Therefore, a strict condition for triggering cell reselection is set (that is, both the condition 1 and the condition 2 need to be met) in the method B2.1. This helps control frequency of cell reselection and further helps improve communication quality of the terminal device.

Method B2.2: Determine that the remaining coverage time is less than or equal to the reselection trigger time threshold, or determine that the cell quality of the serving cell is less than or equal to the reselection trigger quality threshold, and determine to perform the cell reselection.

In this method, the cell reselection is determined to perform if either a condition 1 (the remaining coverage time of the serving cell is less than or equal to the reselection trigger time threshold) or a condition 2 (the cell quality of the serving cell is less than or equal to the reselection trigger quality threshold) is met.

For example, the method may be applied to the following scenario: When it is determined that the reselection trigger quality threshold is less than a preset second threshold, or when it is determined that the reselection trigger quality threshold is less than or equal to the preset second threshold, it is determined, by using the method B2.2, whether to perform the cell reselection. This is because: When the reselection trigger quality threshold is set to a smaller value (specifically, less than or equal to a second threshold), because of a near-far effect, cell quality of cells measured by the terminal device has little difference. Therefore, if the cell reselection is triggered based on only a cell quality factor, it is difficult to trigger the cell reselection. Therefore, a loose condition for triggering the cell reselection is set (that is, either the condition 1 or the condition 2 is met) in the method B2.2. This helps trigger the cell reselection in time and further helps improve communication quality of the terminal device.

In an implementation method, the reselection trigger time threshold, the reselection trigger quality threshold, the first threshold, and the second threshold may be received from the network device. In other words, the terminal device may further receive the reselection trigger time threshold, the reselection trigger quality threshold, the first threshold, and the second threshold from the network device. The first threshold and the second threshold may be the same or different. When the first threshold is same as the second threshold, the network device may send one threshold.

It should be noted that the embodiment shown in FIG. 4A and the embodiment shown in FIG. 4B may be separately implemented, or may be combined with each other. In a possible combination manner, when the two embodiments are combined, it may be determined to perform the cell reselection based on the method in the embodiment in FIG. 4B. To be specific, after it is determined to perform the cell reselection according to the method in the embodiment in FIG. 4B, the target cell is determined according to the method in the embodiment in FIG. 4A. Optionally, in a possible combination manner, the terminal device may perform operations in a sequence of steps 401b, 402b, 401a, 402a, and 403a. Optionally, in this combination manner, the foregoing parameters (such as the reselection trigger time threshold, reselection trigger quality threshold, and coverage time threshold) can be sent in a same message or different messages.

It may be understood that, in embodiments of this application, the terminal device and/or the network device may perform some or all steps in embodiments of this application. These steps or operations are merely examples. In embodiments of this application, other operations or variants of the operations may be further performed. In addition, the steps may be performed in a sequence different from the sequence presented in this embodiment of this application, and not all operations in this embodiments of this application may be performed. In embodiments of this application, unless otherwise stated or there is a logic conflict, terms and/or descriptions between different embodiments are consistent and may be mutually referenced, and technical features in the different embodiments may be combined based on an internal logical relationship thereof, to form a new embodiment.

It may be understood that, in the foregoing method embodiments, the method implemented by the terminal device may also be implemented by a component (for example, a chip or a circuit) used in the terminal device. The method implemented by the network device may also be implemented by a component (for example, a chip or a circuit) used in the network device. This is not limited in embodiments of this application.

FIG. 5 is a possible example block diagram of a communication apparatus according to an embodiment of this application. The communication apparatus 500 may exist in a form of software or hardware. The communication apparatus 500 may include an obtaining unit 501, a remaining coverage time determining unit 502, and a target cell determining unit 503. Optionally, the communication apparatus 500 may further include a receiving unit 504 and a reselection determining unit 505. In an implementation, the obtaining unit 501, the remaining coverage time determining unit 502, the target cell determining unit 503, and the reselection determining unit 505 may be separately disposed, or may be integrated into at least one processing unit. The at least one processing unit is configured to control and manage an action of the communication apparatus 500. The receiving unit 504 is configured to support the communication apparatus 500 to communicate with another network entity. Optionally, the communication apparatus 500 may further include a storage unit. The storage unit may be configured to store instructions and/or data. The at least one processing unit or the obtaining unit 501, the remaining coverage time determining unit 502, the target cell determining unit 503, and the reselection determining unit 505 may read the instructions and/or the data in the storage unit, so that the communication apparatus 500 implements a corresponding method.

In a possible manner, when the obtaining unit 501, the remaining coverage time determining unit 502, the target cell determining unit 503, and the reselection determining unit 505 are integrated into the at least one processing unit, the processing unit may be a processor or a controller, for example, may be a general-purpose central processing unit (central processing unit, CPU), a general-purpose processor, a digital signal processing (digital signal processing, DSP), an application-specific integrated circuit (application-specific integrated circuits, ASIC), a field programmable gate array (field programmable gate array, FPGA), another programmable logic device, a transistor logic device, a hardware component, or any combination thereof. The processing unit may implement or execute various example logical blocks, modules, and circuits described with reference to content disclosed in the present invention. Alternatively, the processor may be a combination of processors implementing a computing function, for example, a combination of one or more microprocessors, or a combination of a DSP and a microprocessor. The receiving unit 504 may be a communication interface, a receiver, a receiving circuit, or the like. The communication interface is a general term. During specific implementation, the communication interface may include at least one interface.

The communication apparatus 500 may be a terminal device configured to perform the embodiment in FIG. 4A, or may be a chip configured to perform steps corresponding to the terminal device in the embodiment in FIG. 4A. For example, when the obtaining unit 501, the remaining coverage time determining unit 502, the target cell determining unit 503, and the reselection determining unit 505 are integrated into one processing unit, the processing unit may be, for example, a processor. The receiving unit 504 may be, for example, a receiver. The receiver includes a radio frequency circuit. For another example, when the obtaining unit 501, the remaining coverage time determining unit 502, the target cell determining unit 503, and the reselection determining unit 505 are integrated into one processing unit, the processing unit may be, for example, a processor. The receiving unit 504 may be, for example, an input interface, a pin, a circuit, or the like.

In one embodiment, the obtaining unit 501 is configured to measure a target frequency to obtain at least two cells that meet a first condition; the remaining coverage time determining unit 502 is configured to determine remaining coverage time of the at least two cells; the target cell determining unit 503 is configured to determine a target cell based on the remaining coverage time of the at least two cells.

In a possible implementation method, the target cell determining unit 503 is specifically configured to determine a cell with longest remaining coverage time in the at least two cells as the target cell.

In a possible implementation method, the target cell determining unit 503 is specifically configured to determine, based on the remaining coverage time and a coverage time threshold of the at least two cells, a cell whose remaining coverage time is greater than or equal to the coverage time threshold as a candidate cell, and determine the target cell based on cell quality of the candidate cell.

In a possible implementation method, the target cell determines unit 503 is specifically configured to determine a cell with best cell quality in the candidate cell as the target cell, a comprehensive value of each cell in the candidate cell based on the cell quality of the candidate cell and remaining coverage time of the candidate cell, and the target cell based on the comprehensive value of each cell.

In a possible implementation method, the receiving unit 504 is configured to receive reselection configuration information from a network device. The reselection configuration information includes the coverage time threshold.

In a possible implementation method, the remaining coverage time determining unit 502 is further configured to determine remaining coverage time of a serving cell of the terminal device. The reselection determining unit 505 is configured to determine to perform cell reselection based on the remaining coverage time and a reselection trigger time threshold.

In a possible implementation method, the reselection determining unit 505 is specifically configured to determine that the remaining coverage time of the serving cell is less than or equal to the reselection trigger time threshold, and determine to perform the cell reselection.

In a possible implementation method, the reselection determining unit 505 is specifically configured to determine to perform the cell reselection based on the remaining coverage time, the reselection trigger time threshold, the cell quality of the serving cell, and a reselection trigger quality threshold.

In a possible implementation method, the reselection determining unit 505 is specifically configured to determine that the remaining coverage time is less than or equal to the reselection trigger time threshold and the cell quality of the serving cell is less than or equal to the reselection trigger quality threshold, and determine to perform the cell reselection.

In a possible implementation method, the reselection determining unit 505 is further configured to determine that the reselection trigger quality threshold is greater than a preset first threshold.

In a possible implementation method, the reselection determining unit 505 is specifically configured to determine that the remaining coverage time is less than or equal to the reselection trigger time threshold or the cell quality of the serving cell is less than or equal to the reselection trigger quality threshold, and determine to perform the cell reselection.

In a possible implementation method, the reselection determining unit 505 is further configured to determine that the reselection trigger quality threshold is less than a preset second threshold.

In a possible implementation method, the receiving unit 504 is configured to receive the reselection trigger time threshold from the network device.

When the apparatus shown in FIG. 5 is the terminal device, for specific advantageous effects of the method for performing cell reselection, refer to related descriptions in the method embodiment shown in FIG. 4A. Details are not described herein again. It may be understood that a unit in this embodiment of this application may also be referred to as a module. The foregoing units or modules may exist independently, or may be integrated together.

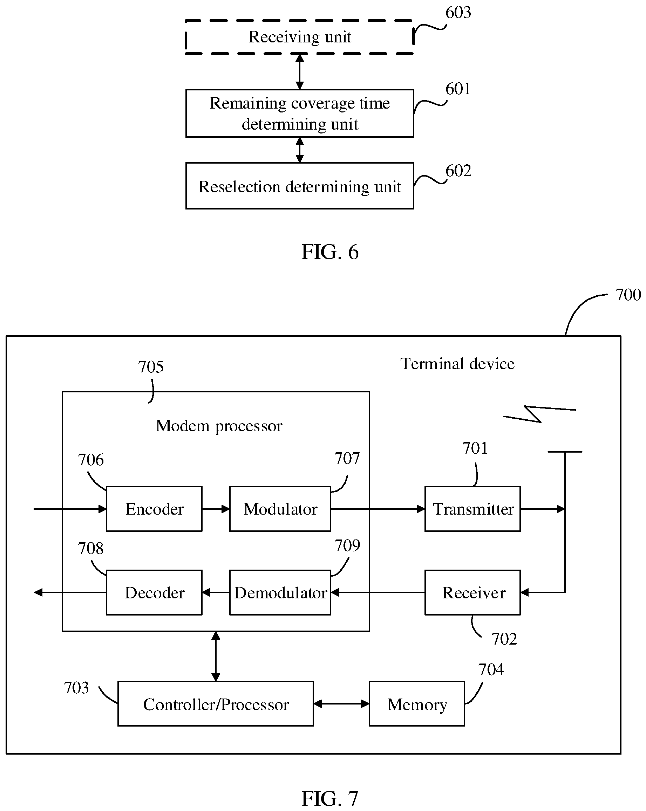

FIG. 6 is a possible example block diagram of a communication apparatus according to an embodiment of this application. The communication apparatus 600 may exist in a form of software or hardware. The communication apparatus 600 may include a remaining coverage time determining unit 601 and a reselection determining unit 602. Optionally, the communication apparatus 600 may further include a receiving unit 603. In an implementation, the remaining coverage time determining unit 601 and the reselection determining unit 602 may be separately disposed, or may be integrated into at least one processing unit. The at least one processing unit is configured to control and manage an action of the communication apparatus 600. The receiving unit 603 is configured to support the communication apparatus 600 to communicate with another network entity. Optionally, the communication apparatus 600 may further include a storage unit. The storage unit may be configured to store instructions and/or data. The at least one processing unit or remaining coverage time determining unit 601, and the reselection determining unit 602 may read the instructions and/or the data in the storage unit, so that the communication apparatus 600 implements a corresponding method.

In a possible manner, when the remaining coverage time determining unit 601 and the reselection determining unit 602 are integrated into the at least one processing unit, the processing unit may be a processor or a controller, for example, may be a CPU, a general-purpose processor, a DSP, or an ASIC, an FPGA, another programmable logic device, a transistor logic device, a hardware component, or any combination thereof. The processing unit may implement or execute various example logical blocks, modules, and circuits described with reference to content disclosed in the present invention. Alternatively, the processor may be a combination of processors implementing a computing function, for example, a combination of one or more microprocessors, or a combination of a DSP and a microprocessor. The receiving unit 603 may be a communication interface, a receiver, a receiving circuit, or the like. The communication interface is a general term. During specific implementation, the communication interface may include at least one interface.

The communication apparatus 600 may be a terminal device configured to perform the embodiment in FIG. 4B, or may be a chip configured to perform steps corresponding to the terminal device in the embodiment in FIG. 4B. For example, when the remaining coverage time determining unit 601 and the reselection determining unit 602 are integrated into one processing unit, the processing unit may be, for example, a processor. The receiving unit 603 may be, for example, a receiver. The receiver includes a radio frequency circuit. For another example, when remaining the coverage time determining unit 601 and the reselection determining unit 602 are integrated into one processing unit, the processing unit may be, for example, a processor. The receiving unit 603 may be, for example, an input interface, a pin, a circuit, or the like.

In one embodiment,
the remaining coverage time determining unit 601 is configured to determine remaining coverage time of a serving cell of the terminal device; and the reselection determining unit 602 is configured to determine whether to perform cell reselection based on remaining coverage time and a reselection trigger time threshold.

In a possible implementation method, the reselection determining unit 602 is specifically configured to determine that the remaining coverage time of the serving cell is less than or equal to the reselection trigger time threshold, and determine to perform the cell reselection.

In a possible implementation method, the reselection determining unit 602 is specifically configured to determine whether to perform the cell reselection based on the remaining coverage time, the reselection trigger time threshold, cell quality of the serving cell, and a reselection trigger quality threshold.

In a possible implementation method, the reselection determining unit 602 is specifically configured to determine that the remaining coverage time is less than or equal to the reselection trigger time threshold and the cell quality of the serving cell is less than or equal to the reselection trigger quality threshold, and determine to perform the cell reselection.

In a possible implementation method, the reselection determining unit 602 is further configured to determine that the reselection trigger quality threshold is greater than a preset first threshold.

In a possible implementation method, the reselection determining unit 602 is specifically configured to determine that the remaining coverage time is less than or equal to the reselection trigger time threshold or the cell quality of the serving cell is less than or equal to the reselection trigger quality threshold, and determine to perform the cell reselection.

In a possible implementation method, the reselection determining unit 602 is further configured to determine that the reselection trigger quality threshold is less than a preset second threshold.

In a possible implementation method, the receiving unit 603 is configured to receive the reselection trigger time threshold from a network device.

When the communication apparatus shown in FIG. 6 is the terminal device, for specific advantageous effects of the cell reselection method, refer to related descriptions in the method embodiment shown in FIG. 4B. Details are not described herein again. It may be understood that a unit in this embodiment of this application may also be referred to as a module. The foregoing units or modules may exist independently, or may be integrated together.

FIG. 7 is a simplified schematic diagram depicting a possible designed structure of a terminal device according to an embodiment of the present invention. A terminal device 700 includes a transmitter 701, a receiver 702, and a processor 703. The processor 703 may also be a controller and is represented as the "controller/processor 703" in FIG. 7. Optionally, the terminal device 700 may further include a modem processor 705. The modem processor 705 may include an encoder 706, a modulator 707, a decoder 708, and a demodulator 709.

In an example, the transmitter 701 adjusts (for example, through analog conversion, filtering, amplification, and up-conversion) an output sample and generates an uplink signal. The uplink signal is transmitted to the access network device in the foregoing embodiment through an antenna. On a downlink, the antenna receives a downlink signal transmitted by the access network device in the foregoing embodiment. The receiver 702 performs adjustment (for example, filtering, amplification, down-conversion, or digitization) on a signal received from the antenna and provides an input sample. In the modem processor 705, the encoder 706 receives service data and a signaling message that are to be sent over an uplink, and processes (for example, formats, encodes, and interleaves) the service data and the signaling message. The modulator 707 further processes (for example, performs symbol mapping and modulation) encoded service data and an encoded signaling message and provides the output sample. The demodulator 709 processes (for example, demodulates) the input sample and provides symbol estimation. The decoder 708 processes (for example, through de-interleaving and decoding) the symbol estimation and provides decoded data and a decoded signaling message that are to be sent to the terminal device 700. The encoder 706, the modulator 707, the demodulator 709, and the decoder 708 may be implemented by the combined modem processor 705. The units perform processing based on a radio access technology used by a radio access network. It should be noted that when the terminal device 700 does not include the modem processor 705, the foregoing functions of the modem processor 705 may also be implemented by the processor 703.

The processor 703 controls and manages actions of the terminal device 700, and is configured to perform a processing process performed by the terminal device 700 in the foregoing embodiments of the present invention. For example, the processor 703 is configured to perform a processing process of the terminal device in the cell reselection method according to any one of embodiments of this application and/or another process of the technical solutions described in this application.

Further, the terminal device 700 may further include a memory 704, and the memory 704 is configured to store program code and data of the terminal device 600.

An embodiment of this application further provides a communication apparatus. The apparatus may exist in a form of software or hardware. The communication apparatus may include a sending unit. The sending unit is configured to support the communication apparatus to communicate with another network entity. The sending unit may be a communication interface, a transmitter, a sending circuit, or the like. The communication interface is a general term. During specific implementation, the communication interface may include at least one interface.

The apparatus may be a network device configured to perform any of the foregoing embodiments, or may be a chip configured to implement steps of a network device corresponding to any of the foregoing embodiments. For example, the sending unit may be, for example, a transmitter. The transmitter includes a radio frequency circuit. Alternatively, the sending unit may be, for example, an output interface, a pin, a circuit, or the like.

In one embodiment,
a network device sends reselection configuration information to a terminal device, where the reselection configuration information includes a coverage time threshold, and the coverage time threshold is used by the terminal device to determine a target cell.

In some possible implementations, the network device may further send a reselection trigger time threshold to the terminal device, where the reselection trigger time threshold is used by the terminal device to determine whether to perform cell reselection.

In still another embodiment,
a network device sends a reselection trigger time threshold to a terminal device, where the reselection trigger time threshold is used by the terminal device to determine whether to perform cell reselection.

Optionally, the apparatus may further include a processing unit. The processing unit is configured to generate or determine a coverage time threshold and/or the reselection trigger time threshold.

Optionally, the apparatus may further include a storage unit. The storage unit may be configured to store instructions and/or data. The processing unit may read the instructions and/or the data in the storage unit, so that the communication apparatus implements a corresponding method.

For specific advantageous effects of the foregoing method for performing cell reselection by the communication apparatus, refer to related descriptions in the foregoing method embodiments. Details are not described herein again. It may be understood that a unit in this embodiment of this application may also be referred to as a module. The foregoing units or modules may exist independently, or may be integrated together.

An embodiment of this application further provides a communication system. The communication system includes a terminal device in any of the foregoing method embodiments and a network device in this embodiment.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, all or some of the procedures or the functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an EPROM, an EEPROM, a register, a hard disk, a removable magnetic disk, a CD-ROM, or a storage medium of any other form in the art. For example, the storage medium may connect to a processor, so that the processor can read information from the storage medium and write information into the storage medium. Optionally, the storage medium may alternatively be integrated into the processor. The processor and the storage medium may be disposed in the ASIC, and the ASIC may be disposed in a terminal. Optionally, the processor and the storage medium may also be disposed in different components of the terminal.

These computer program instructions may alternatively be loaded onto a computer or another programmable data processing device, so that a series of operation steps are performed on the computer or the another programmable device, to generate computer-implemented processing. Therefore, the instructions executed on the computer or the another programmable device provide steps for implementing a specified function in one or more processes in the flowcharts and/or in one or more blocks in the block diagrams.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of the claims of this application and their equivalent technologies.

**Claims**

1. A cell reselection method, comprising:

    measuring a target frequency to obtain at least two cells that meet a first condition;
    determining remaining coverage time of the at least two cells; and
    determining a target cell based on the remaining coverage time of the at least two cells.

**2.** The method according to claim 1, wherein the determining a target cell based on the remaining coverage time of the at least two cells comprises:
determining a cell with longest remaining coverage time in the at least two cells as the target cell.

**3.** The method according to claim 1, wherein the determining a target cell based on the remaining coverage time of the at least two cells comprises:

determining, based on the remaining coverage time and a coverage time threshold of the at least two cells, a cell whose remaining coverage time is greater than or equal to the coverage time threshold as a candidate cell; and
determining the target cell based on cell quality of the candidate cell.

**4.** The method according to claim 3, wherein the determining the target cell based on cell quality of the candidate cell comprises:

determining a cell with best cell quality in the candidate cell as the target cell; or
determining a comprehensive value of each cell in the candidate cell based on the cell quality of the candidate cell and remaining coverage time of the candidate cell, and determining the target cell based on the comprehensive value of each cell.

**5.** The method according to claim 3 or 4, further comprising:
receiving reselection configuration information from a network device, wherein the reselection configuration information comprises the coverage time threshold.

**6.** The method according to any one of claims 1 to 5, wherein before the measuring a target frequency to obtain at least two cells that meet a first condition, the method further comprises:

determining remaining coverage time of a serving cell of a terminal device; and
determining to perform cell reselection based on the remaining coverage time and a reselection trigger time threshold.

**7.** The method according to claim 6, wherein the determining to perform cell reselection based on the remaining coverage time and a reselection trigger time threshold comprises:
determining that the remaining coverage time of the serving cell is less than or equal to the reselection trigger time threshold, and determining to perform the cell reselection.

**8.** The method according to claim 6, wherein the determining to perform cell reselection based on the remaining coverage time and a reselection trigger time threshold comprises:
determining, based on the remaining coverage time, the reselection trigger time threshold, cell quality of the serving cell, and a reselection trigger quality threshold, to perform the cell reselection.

**9.** The method according to claim 8, wherein the determining, based on the remaining coverage time, the reselection trigger time threshold, cell quality of the serving cell, and a reselection trigger quality threshold, to perform the cell reselection comprises:
determining that the remaining coverage time is less than or equal to the reselection trigger time threshold and the cell quality of the serving cell is less than or equal to the reselection trigger quality threshold, and determining to perform the cell reselection.

**10.** The method according to claim 9, wherein the method further comprises:
determining that the reselection trigger quality threshold is greater than a first threshold.

**11.** The method according to claim 8, wherein the determining, based on the remaining coverage time, the reselection trigger time threshold, cell quality of the serving cell, and a reselection trigger quality threshold, to perform the cell reselection comprises:
determining that the remaining coverage time is less than or equal to the reselection trigger time threshold or the cell quality of serving cell is less than or equal to the reselection trigger quality threshold, and determining to perform the cell reselection.

**12.** The method according to claim 11, wherein the method further comprises:
determining that the reselection trigger quality threshold is less than a second threshold.

**13.** The method according to any one of claims 6 to 12, further comprising:
receiving the reselection trigger time threshold from the network device.

**14.** A cell reselection method, comprising:

determining remaining coverage time of a serving cell of a terminal device; and
determining, based on the remaining coverage time and a reselection trigger time threshold, whether to perform cell reselection.

**15.** The method according to claim 14, wherein the determining, based on the remaining coverage time and a reselection trigger time threshold, whether to perform cell reselection comprises:

determining that the remaining coverage time of the serving cell is less than or equal to the reselection trigger time threshold, and determining to perform the cell reselection.

16. The method according to claim 14, wherein the determining, based on the remaining coverage time and a reselection trigger time threshold, whether to perform cell reselection comprises:
determining, based on the remaining coverage time, the reselection trigger time threshold, cell quality of the serving cell, and a reselection trigger quality threshold, whether to perform the cell reselection.

17. The method according to claim 16, wherein the determining, based on the remaining coverage time, the reselection trigger time threshold, cell quality of the serving cell, and a reselection trigger quality threshold, whether to perform the cell reselection comprises:
determining that the remaining coverage time is less than or equal to the reselection trigger time threshold and the cell quality of the serving cell is less than or equal to the reselection trigger quality threshold, and determining to perform the cell reselection.

18. The method according to claim 17, wherein the method further comprises:
determining that the reselection trigger quality threshold is greater than a first threshold.

19. The method according to claim 16, wherein the determining, based on the remaining coverage time, the reselection trigger time threshold, cell quality of the serving cell, and a reselection trigger quality threshold, whether to perform the cell reselection comprises:
determining that the remaining coverage time is less than or equal to the reselection trigger time threshold or the cell quality of the serving cell is less than or equal to the reselection trigger quality threshold, and determining to perform the cell reselection.

20. The method according to claim 19, wherein the method further comprises:
determining that the reselection trigger quality threshold is less than a second threshold.

21. The method according to any one of claims 14 to 20, wherein the method further comprises:
receiving the reselection trigger time threshold from a network device.

22. A communication apparatus, configured to implement the method according to any one of claims 1 to 13.

23. A communication apparatus, configured to implement the method according to any one of claims 14 to 21.

24. A cell reselection system, comprising a terminal device and a network device, wherein

the network device is configured to send reselection configuration information to the terminal device, wherein the reselection configuration information comprises a coverage time threshold; and
the terminal device is configured to: measure a target frequency to obtain at least two cells that meet a first condition; determine remaining coverage time of the at least two cells; and determine a target cell based on the remaining coverage time of the at least two cells and the coverage time threshold.

25. A cell reselection system, comprising a terminal device and a network device, wherein

the network device is configured to send a reselection trigger time threshold to the terminal device; and
the terminal device is configured to: determine remaining coverage time of a serving cell of the terminal device; and determine, based on the remaining coverage time and the reselection trigger time threshold, whether to perform cell reselection.

26. A communication apparatus, comprising a processor, wherein the processor is configured to invoke a program in a memory, to perform the method according to any one of claims 1 to 13.

27. A communication apparatus, comprising a processor, wherein the processor is configured to invoke a program in a memory, to perform the method according to any one of claims 14 to 21.

28. A computer-readable storage medium, wherein the computer-readable storage medium stores a program, and when the program is invoked by a processor, the method according to any one of claims 1 to 21 is executed.

29. A computer program, wherein when the program is invoked by a processor, the method according to any one of claims 1 to 21 is executed.

FIG. 1

Movement direction of a satellite

| T3 | T2 | T1 | T3 | T2 | T1 | T3 |
|---|---|---|---|---|---|---|
| Satellite 1 | Satellite 1 | Satellite 1 | Satellite 2 | Satellite 2 | Satellite 2 | Satellite 3 |

PCI1    PCI2    PCI3    PCI4

UE1    UE2    UE3    UE4

FIG. 2

Movement direction of a satellite

FIG. 3

Measure a target frequency to obtain at least two cells that meet a first condition ⟋ 401a

Determine remaining coverage time of the at least two cells ⟋ 402a

Determine a target cell based on the remaining coverage time of the at least two cells ⟋ 403a

FIG. 4A

Determine remaining coverage time of a serving cell of a terminal device ⟋ 401b

Determine whether to perform cell reselection based on the remaining coverage time and a reselection trigger time threshold of the serving cell ⟋ 402b

FIG. 4B

Receiving unit ⟋ 504

Reselection determining unit ⟋ 505

Obtaining unit ⟋ 501

Remaining coverage time determining unit ⟋ 502

Target cell determining unit ⟋ 503

FIG. 5

603

Receiving unit

601

Remaining coverage time
determining unit

602

Reselection determining unit

FIG. 6

700

Terminal device

705

Modem processor

706

Encoder

707

Modulator

701

Transmitter

708

Decoder

709

Demodulator

Receiver

702

703

Controller/Processor

704

Memory

FIG. 7

## INTERNATIONAL SEARCH REPORT

International application No.

**PCT/CN2019/108726**

**A.    CLASSIFICATION OF SUBJECT MATTER**

H04W 36/00(2009.01)i

According to International Patent Classification (IPC) or to both national classification and IPC

**B.    FIELDS SEARCHED**

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNPAT; CNKI; WPI; EPODOC; IEEE; 3GPP: 小区, 重选, 切换, 重新, 选择, 非陆地, 非地面, 高空, 移动, 卫星, 移动无人机, 移动热气球, 覆盖, 服务, 剩余, 剩下, 时间, 时长, 期间, 还剩, 频繁, 乒乓, cell, reselection, handover, NTN, non-terrestrial, high, altitude, satellite, cover, coverage, serve, service, left, remain, time, duration, term, period

**C.    DOCUMENTS CONSIDERED TO BE RELEVANT**

| Category* | Citation of document, with indication, where appropriate, of the relevant passages | Relevant to claim No. |
|---|---|---|
| X | CN 106792946 A (BEIJING UNIVERSITY OF POSTS AND TELECOMMUNICATIONS et al.) 31 May 2017 (2017-05-31) description paragraphs [0012]-[0017], figure 4 | 1-29 |
| A | CN 102111787 A (CHONGQING CYIT COMMUNICATION TECHNOLOGIES CO., LTD.) 29 June 2011 (2011-06-29) entire document | 1-29 |
| A | CN 106714243 A (PREADTRUM COMMUNICATIONS (SHANGHAI) CO., LTD.) 24 May 2017 (2017-05-24) entire document | 1-29 |
| A | WO 2015118328 A1 (BRITISH TELECOMMUNICATIONS PUBLIC LIMITED COMPANY) 13 August 2015 (2015-08-13) entire document | 1-29 |
| A | CMCC. "Issues of UE mobility state estimation in NTN" *3GPP TSG-RAN WG2 Meeting #103bis, R2-1815255*, 12 October 2018 (2018-10-12), entire document | 1-29 |

☑ Further documents are listed in the continuation of Box C.          ☑ See patent family annex.

```
*     Special categories of cited documents:
"A"  document defining the general state of the art which is not considered
      to be of particular relevance
"E"   earlier application or patent but published on or after the international
      filing date
"L"   document which may throw doubts on priority claim(s) or which is
      cited to establish the publication date of another citation or other
      special reason (as specified)
"O"  document referring to an oral disclosure, use, exhibition or other
      means
"P"   document published prior to the international filing date but later than
      the priority date claimed
```

```
"T"   later document published after the international filing date or priority
      date and not in conflict with the application but cited to understand the
      principle or theory underlying the invention
"X"   document of particular relevance; the claimed invention cannot be
      considered novel or cannot be considered to involve an inventive step
      when the document is taken alone
"Y"   document of particular relevance; the claimed invention cannot be
      considered to involve an inventive step when the document is
      combined with one or more other such documents, such combination
      being obvious to a person skilled in the art
"&"  document member of the same patent family
```

| Date of the actual completion of the international search | Date of mailing of the international search report |
|---|---|
| **15 June 2020** | **23 June 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

| International application No. |
|---|
| **PCT/CN2019/108726** |

**C.      DOCUMENTS CONSIDERED TO BE RELEVANT**

| Category* | Citation of document, with indication, where appropriate, of the relevant passages | Relevant to claim No. |
|---|---|---|
| A | CMCC. "GEO and LEO impact on UE mobility state estimation" *3GPP TSG-RAN WG2 Meeting #106, R2-1905934*, 17 May 2019 (2019-05-17), entire document | 1-29 |

Form PCT/ISA/210 (second sheet) (January 2015)

**INTERNATIONAL SEARCH REPORT**
Information on patent family members

International application No.

**PCT/CN2019/108726**

| Patent document cited in search report | | | Publication date (day/month/year) | Patent family member(s) | | | Publication date (day/month/year) |
|---|---|---|---|---|---|---|---|
| CN | 106792946 | A | 31 May 2017 | None | | | |
| CN | 102111787 | A | 29 June 2011 | None | | | |
| CN | 106714243 | A | 24 May 2017 | None | | | |
| WO | 2015118328 | A1 | 13 August 2015 | US | 2016345248 | A1 | 24 November 2016 |
| | | | | EP | 3103286 | A1 | 14 December 2016 |
| | | | | CN | 106105324 | A | 09 November 2016 |

Form PCT/ISA/210 (patent family annex) (January 2015)